Europäisches Patentamt

(19) European Patent Office    (11) Publication number: **0 176 191**

Office européen des brevets                                **B1**

(12)                    **EUROPEAN PATENT SPECIFICATION**

(45) Date of publication of patent specification: **21.03.90**    (51) Int. Cl.⁵: **B 65 G 1/04**

(21) Application number: **85305435.1**

(22) Date of filing: **30.07.85**

(54) **Equipment for storage and further distribution of dairy products.**

(30) Priority: **27.08.84 FI 843375**

(43) Date of publication of application:
**02.04.86 Bulletin 86/14**

(45) Publication of the grant of the patent:
**21.03.90 Bulletin 90/12**

(84) Designated Contracting States:
**AT BE CH DE FR GB LI**

(56) References cited:
**WO-A-81/02563**
**DE-A-1 431 582**
**US-A-3 557 567**
**US-A-3 863 777**

(73) Proprietor: **VALPAK OY**
**Vanha valtatie 23**
**SF-04400 Järvenpää (FI)**

(72) Inventor: **Koskivaara, Tapio**
**Kytotie 56**
**SF-04400 Jarvenpaa (FI)**

(74) Representative: **Bayliss, Geoffrey Cyril et al**
**BOULT, WADE & TENNANT 27 Furnival Street**
**London EC4A 1PQ (GB)**

Courier Press, Leamington Spa, England.

## Description

The present invention relates to equipment for storage and further distribution of dairy products comprising several product lines and which are conveyed from the dairy store in rolling carriers.

The use of a flow-through store as cold store, through which rolling carriers filled with products pass in line, is previously known. The filling of the roller is down at the end of the production line of the product, and thus one rolling carrier always contains one product, either as a separate unit or packed in trays. At the starting end of the through flow store the products are reorganised in roller carriers each time according to customers' orders. This work, which is mainly carried out manually, is heavy as well as time-consuming, and that is why the present invention aims at producing distribution equipment for use in a cold store, in which the additional organizing can be eliminated, combined with a notable automation of the entire cold store and the packing process.

The invention provides equipment for storage and further distribution of dairy products, which equipment comprises at least one cold store through flow cassette wherein the cassette having several superposed longitudinal conveyors extending between receiving and delivery ends of the cassette for receiving the products at different levels, a vertical conveyor for the filling of the different levels at the receiving end of the cassette, and at least one vertical conveyor and filling means for filling the products into the rolling carriers (R) at the delivery end of the cassette.

Thus the essential difference from prior art consists in that the transfer of the products into the rolling carriers takes place only after the cold store, which makes it possible to fill the rolling carriers according to the orders and to do the premailing for each shop in connection with the filling or in the intermediate storage phase following immediately after the filling. For the products arriving from other production plants special flow-through cassettes are reserved, so that these products can be equally filled into the rolling carriers by means of the same automatic control system.

The invention and its advantages are explained in connection with the following example and referring to the enclosed figures, of which:

Figure 1 gives a schematic top view of the system according to the invention;

Figure 2 shows the module cassette of the cold store;

Figure 3 represents the filling phase of the roller;

Figure 4 gives a lateral view of the horizontal conveyors of the store as well as of the filling station and of the horizontal conveyors; and

Figure 5 is a schematic illustration of the basic units of the control logics.

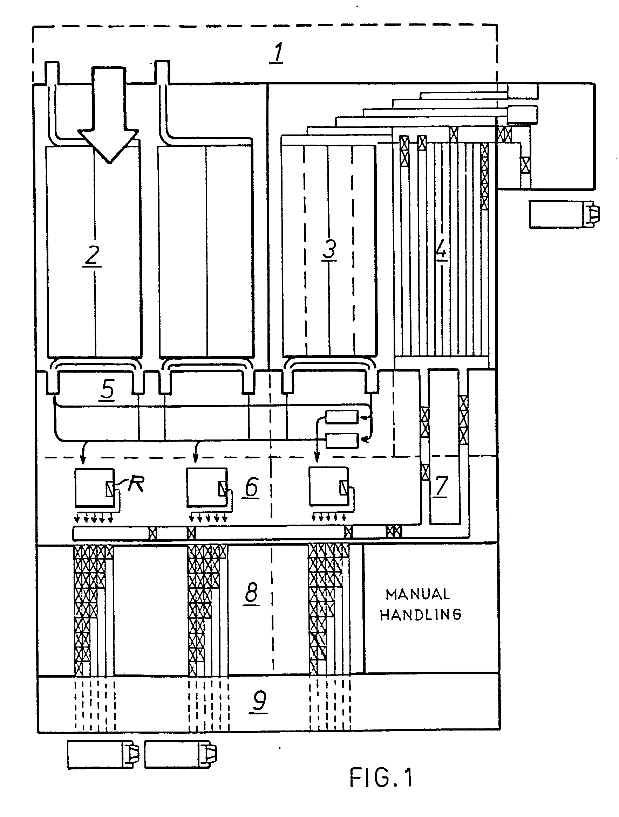

In Figure 1 the vertical conveyors of the filling end of the store have generally been marked by number 1. Number 2 refers to the module cassette of the cold store for the products of the production plant and numbers 3-4 module cassettes for products arriving from other production plants. After the cassettes, the transport lines 5 of the unloading end of the roller filling station 6 have been adapted. Number 7 refers to the conveyor of rolling carriers arriving from elsewhere, 8 is an intermediate store and 9 the loading station of the rolling carriers.

The method is carried out as follows:

The packages destined directly to the customers are transferred by means of vertical conveyor 1 from the packing machine to the store cassettes, where the packages are received one by one.

Packages to be intermediately stored, possibly destined to another production plant, are not conveyed into store cassettes, but are directly packed (into trays, which are then further packed) into rolling carriers (not shown in the figure).

Packages to be intermediately stored arriving from another production plant are unloaded one by one or by trays from the rolling carrier and are conveyed into store cassettes 3 and 4 reserved for them.

The unloading of the store cassette is done twice as fast as the filling, as shown below. The packages are conveyed from the store cassettes to the rapid rolling carrier filling machines 6, wherein all four layer levels are simultaneously and individually filled according to customers' orders.

Filling and unloading of the same level of the store cassette cannot operate simultaneously. If the unloading is interrupted on some level of the store cassette and the level has to be refilled before it is completely empty, the packages at the unloading end are taken to the starting end by reversing the carpet conveyor of the level. A reverse is supplied on the top level of each cassette.

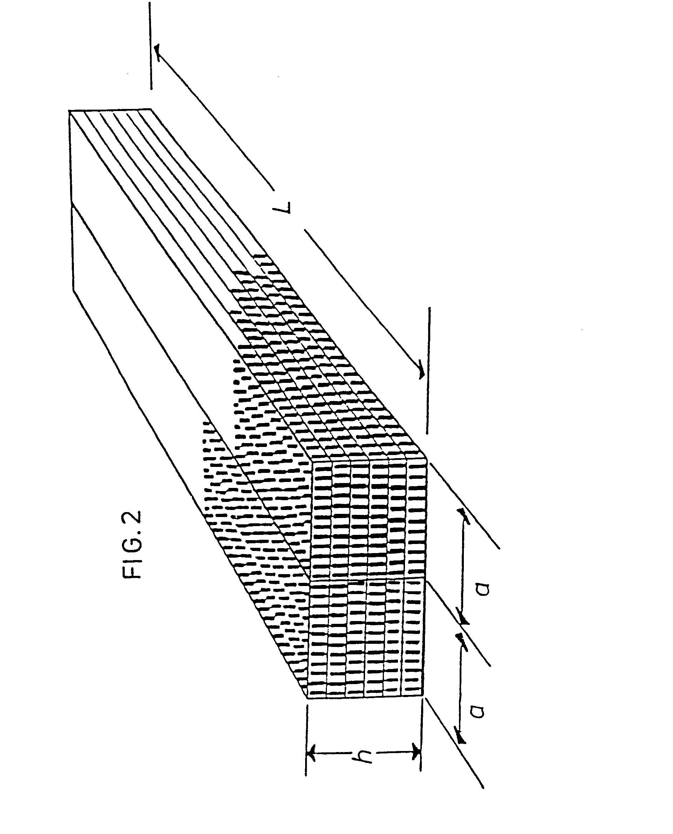

The size and number of store cassettes is selected according to the requirements of the production plants so that the computer can easily control the filling and unloading of the store cassettes, and that no such situation arises, in which intermediate packages on the store level would have to be unloaded before packages in front. In the case of the example h=3m, a=3m, and L-18m (Figure 2).

The loading and unloading of the store cassette comprise the following phases:

### Filling of the cassette

The packages are conveyed in a line by the unit conveyor from the packing machines to the filling end of the store cassette up to vertical conveyor 1.

A line of 20 packages is pushed sideways from the unit conveyor onto the vertical conveyor.

By the vertical conveyor the packing line is conveyed in steps to one of the six store levels selected by the computer.

The package line is pushed sideways from vertical conveyor 1 to the unit conveyor of the store level.

Four consecutive package lines are collected in steps onto the unit conveyor.

The prepared line of 80 packages is transported by the unit conveyor to the store level by splitting the line into two consecutive lines of 40 packages.

Both package lines are simultaneously pushed sideways from the unit conveyor into both sectors of the store level.

Parallel package lines are collected with short intervals onto the carpet conveyor of the store level. The level takes more than 200 parallel lines.

**Unloading of the cassette**

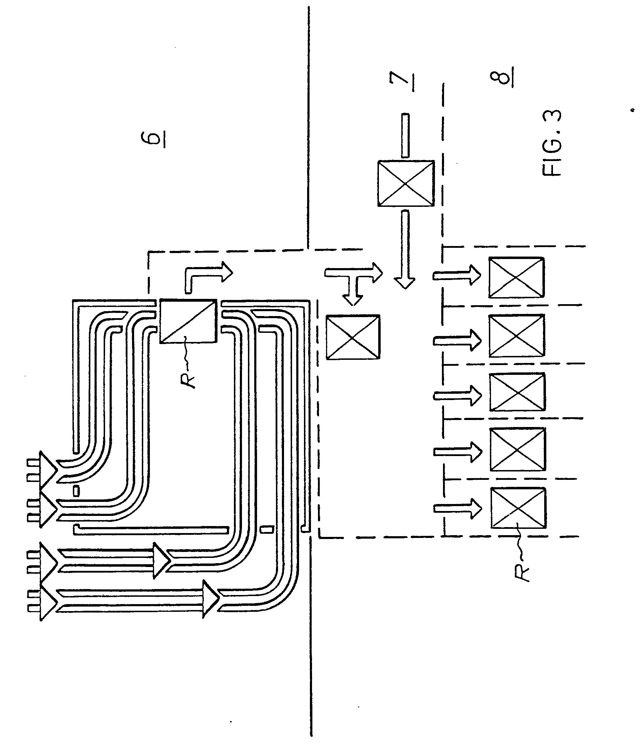

From both sectors of the store level selected by the computer the package lines are drawn simultaneously sideways onto two vertical conveyors of the unloading end (Figure 1, point 5; Figure 3).

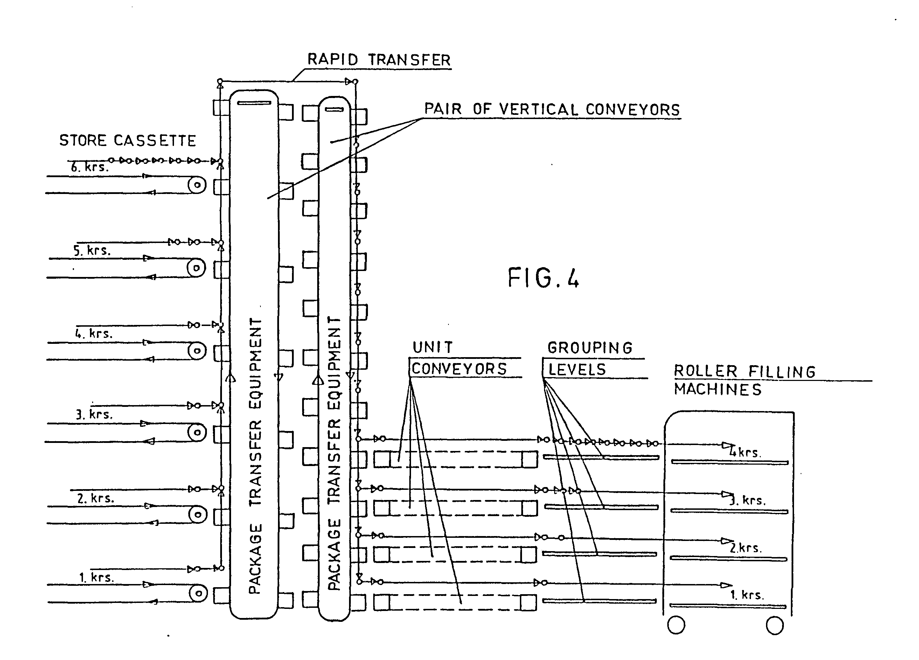

The package lines are carried simultaneously in steps by the vertical conveyors to one of four unit conveyor levels of the unloading end selected by the computer (Figure 4).

The packages are conveyed by the unit conveyors through the distributors and connectors controlled by the computer up to the rolling carrier filling machines 6.

The filled carriers R are conveyed to the intermediate store conveyors 8 selected by the computer.

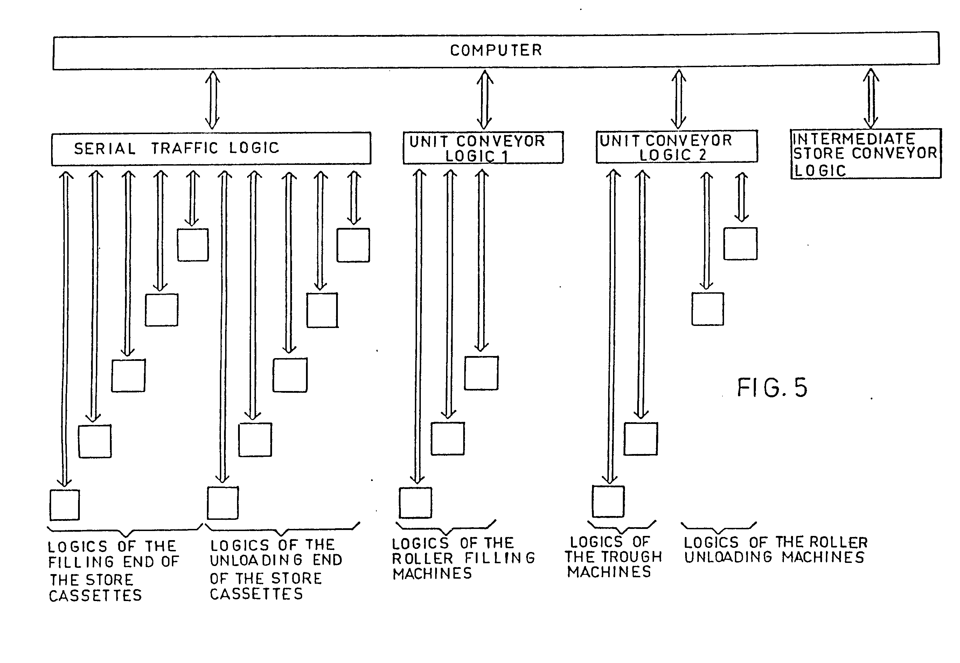

In Figure 5 the control logic of the equipment is shown. The store is controlled by the computer, which acquires the data on the package labels to be stored and the store cassettes to which they should be taken. There may be e.g. 20 labels, 5 store cassettes and 6 store levels in each cassette.

During the filling, the computer records the storage sites of the packages, of which there can be e.g. 100 000/cassette, as well as the packing datas of the packages. All this information is naturally available at anytime from the computer memory. The computer also collects data about the orders of each customer, the number of customers being e.g. 1000, and the orders including the labels, the quantities, and the collection datas and times of the packages, in addition to the customer data.

The computer reports the data about the contents of the store cassette as well as about the customer mailing. This is important among other things with regard to the control of the production lines.

**Claims**

1. Equipment for storage and further distribution of dairy products, which equipment comprises at least one cold store through flow cassette (2, 3, 4), wherein the cassette (2, 3, 4) having several superposed longitudinal conveyors extending between receiving and delivery ends of the cassette for receiving the products at different levels, a vertical conveyor (1) for the filling of the different levels at the receiving end of the cassette, and at least one vertical conveyor (5) and filling means (6) for filling the products into the rolling carriers (R) at the delivery end of the cassette.

2. Equipment according to Claim 1, characterised in that several parallel cassettes (2, 3, 4) are provided, of which some (3, 4) are reserved for the reception of products arriving from other production plants individually or packed into troughs.

3. Equipment according to Claim 1 or 2, characterised in that an intermediate rolling carrier store (8) is provided after the flow-through cold store (2, 3, 4).

4. Equipment according to any of Claims 1, or 3, characterised in that a computer control is provided for controlling filling of the different levels of the flow-through cassettes (2, 3, 4) as well as the monitoring of the products during the flow-through and the filling of the products into the rolling carriers at the end of the store.

**Patentansprüche**

1. Vorrichtung zum Lagern und zur Verteilung von Molkereiprodukten, welche Vorrichtung mindestens eine Kaltlagerdurchlaufcassette (2, 3, 4) beinhaltet, wobei die Cassette (2, 3, 4) verschiedene übereinander liegende Längsförderer hat, die sich zwischen den Annahme- und Abgabeenden der Cassette zum Empfangen der Produkte in verschiedenen Höhenlagen erstrecken, mit einem Vertikalförderer (1) zum Befüllen der verschiedenen Höhenlagen am Annahmeende der Cassette und mit mindestens einem Vertikalförderer (5) und Befüllmitteln (6) zum Befüllen der Produkte in Rollträger (R) am Abgabeende der Cassette.

2. Vorrichtung nach Anspruch 1, dadurch gekennzeichnet, daß mehrere parallele Cassetten (2, 3, 4) vorgesehen sind, von denen einige (3, 4) für die Aufnahme von Produkten reserviert sind, die von anderen Produktionsanlagen einzeln oder in Behältern abgepackt ankommen.

3. Vorrichtung nach Anspruch 1 oder 2, dadurch gekennzeichnet, daß ein Zwischen-Rollträgerspeicher (8) nach dem Durchlaufkaltlager (2, 3, 4) vorgesehen ist.

4. Vorrichtung nach einem der Ansprüche 1 oder 3, dadurch gekennzeichnet, daß eine Computersteuerung vorgesehen ist zum Steuern der Befüllung der verschiedenen Höhenlagen der Durchlaufcassetten (2, 3) sowie zum Überwachen der Produkte während des Durchlaufes und während der Befüllung der Produkte in die Rollträger am Ende des Lagers.

**Revendications**

1. Equipement pour le stockage et la distribution ultérieure de produits laitiers, ledit équipement comprenant au moins un magasin à chambre froide à circulation (2, 3, 4), le magasin (2, 3, 4) possèdant plusieurs convoyeurs longitudinaux superposés s'étendant entre des extrémités de réception et de délivrance du magasin pour recevoir les produits à des niveaux différents, un convoyeur vertical (1) pour le remplissage des différents niveaux à l'extrémité de réception du magasin et au moins un convoyeur vertical (5) et des moyens de remplissage (6) pour remplir en produits les supports roulants (R) à l'extrémité de délivrance du magasin.

2. Equipement selon la revendication 1, caractérisé par le fait qu'il est prévu plusieurs magasins parallèles (2, 3, 4) dont certains (3) sont réservés pour la réception de produits arrivant d'autres usines de production individuellement ou conditionnés en cuves.

3. Equipement selon la revendication 1 ou 2, caractérisé par le fait qu'un stockage de chariots roulants (8) est prévu après la chambre froide à circulation (2, 3, 4).

4. Equipement selon l'une quelconque des revendications 1 ou 3, caractérisé par le fait qu'une commande par ordinateur est prévue pour commander le remplissage des différents niveaux des magasins à circulation (2, 3, 4) ainsi que pour contrôler les produits pendant la circulation et le remplissage en produits des chariots roulants à l'extrémité du magasin.

FIG.1

FIG.2

FIG. 3

FIG. 4

FIG. 5

Figure showing COMPUTER connected to: INTERMEDIATE STORE CONVEYOR LOGIC; UNIT CONVEYOR LOGIC 2 (LOGICS OF THE ROLLER UNLOADING MACHINES, LOGICS OF THE TROUGH MACHINES); UNIT CONVEYOR LOGIC 1 (LOGICS OF THE ROLLER FILLING MACHINES); SERIAL TRAFFIC LOGIC (LOGICS OF THE UNLOADING END OF THE STORE CASSETTES, LOGICS OF THE FILLING END OF THE STORE CASSETTES).